# EUROPÄISCHE PATENTSCHRIFT

(11) **EP 3 564 629 B1**
(45) Veröffentlichungstag und Bekanntmachung des Hinweises auf die Patenterteilung: **10.11.2021**
(21) Anmeldenummer: 19171828.7
(22) Anmeldetag: 30.04.2019
(51) Int. Cl.: G01D 11/24

(54) **SENSORVORRICHTUNG UND VERFAHREN ZUM HERSTELLEN EINER SENSORVORRICHTUNG**
SENSOR DEVICE AND METHOD FOR PRODUCING SAME
DISPOSITIF DE DÉTECTION ET PROCÉDÉ DE FABRICATION D'UN DISPOSITIF DE DÉTECTION

(30) Priorität: 04.05.2018 DE 102018110783
(43) Veröffentlichungstag der Anmeldung: 06.11.2019
(73) Patentinhaber: ABB Schweiz AG, 5400 Baden (CH)
(72) Erfinder: Ahrend, Ulf, 76185 Karlsruhe (DE); Decker, Andreas, 49377 Vechta (DE); Gebhardt, Jörg, 55130 Mainz (DE); Sosale, Guruprasad, 80997 München (DE); Kaul, Holger, 68165 Mannheim (DE); Mendoza, Francisco, 69198 Schriesheim (DE); Rodenbusch-Mohr, Thomas, 68161 Mannheim (DE); Beniston, John, 69231 Rauenberg (DE); Zierach, Falk, 58513 Lüdenscheid (DE); Maier, Vladimir, 58507 Lüdenscheid (DE); de Jager, Dirk Petrus Gijsbertus, 6824EH Arnhem (NL)
(74) Vertreter: Zimmermann & Partner Patentanwälte mbB

(56) Entgegenhaltungen:
- DE-A1-102006 032 250
- DE-A1-102007 001 381
- DE-A1-102012 224 424
- DE-A1-102013 206 689
- JP-A- H08 193 848
- JP-A- 2016 157 356
- Bwf: "Ideen nehmen Profil an. Ideas turn into profiles", , 31 May 2015 (2015-05-31), pages 42-51, XP055745309, Retrieved from the Internet: URL:https://www.kanetis.gr/wp-content/uplo ads/kanetis/Lagerkatalog_de+en_2015_web.pd f [retrieved on 2020-10-29]

## Beschreibung

### TECHNISCHES GEBIET

Die Erfindung bezieht sich auf das Gebiet der solarbetriebenen Sensorvorrichtungen, insbesondere für den Anwendungsbereich der Hausautomation in Innenräumen. Ferner betrifft die Erfindung ein Herstellungsverfahren derartiger Sensorvorrichtungen.

### TECHNISCHER HINTERGRUND

Im Zuge der Entwicklung der Hausautomation werden zunehmend Messgeräte eingesetzt, die Umgebungsgrößen wie Temperatur, Feuchte, Druck, Helligkeit, Gaskonzentration, Staub, Vibration usw. messen. Typischerweise werden derartige Messgeräte im Innenbereich verwendet und mit einer autonomen Energieversorgung, d.h. ohne Netzversorgung, ausgestattet. Beispielsweise können die Messgeräte mit einer Batterie betrieben werden. Alternativ können die Messgeräte durch die Gewinnung von Umgebungsenergie, z.B. durch die Verwendung von Solarzellen, betrieben werden. Aus Kosten- und Robustheitsgründen werden zunehmend siliziumbasierte Solarzellen eingesetzt.

Insbesondere hat sich herausgestellt, dass für Lichtverhältnisse mit niedriger Bestrahlungsstärke, insbesondere unter Kunstlicht, auf amorphem Silizium (a-Si) basierende Solarzellen die bevorzugte Wahl darstellen. Nachteilig an a-Si-Solarzellen ist, dass diese durch ihr typischerweise dunkelbraunes optisches Erscheinungsbild einen deutlichen Kontrast zu den Messgeräten und deren Montageumgebung bilden und daher oft als nicht ästhetisch beurteilt werden. Da Messgeräte zur Hausautomation typischerweise an sichtbaren Stellen, z.B. an Decken, Wänden oder Ähnlichem, installiert und montiert werden, ist eine Anpassbarkeit des optischen Erscheinungsbilds des Messgeräts an die Montageumgebung von großem Interesse.

Zur Realisierung der Anpassbarkeit des optischen Erscheinungsbilds von Solarzellen sind aus dem Stand der Technik farbige Solarzellen auf Si-Basis bekannt. Die aus dem Stand der Technik bekannten farbigen Solarzellen sind allerdings recht kostenintensiv, da spezielle Prozessschritte bei deren Herstellung angewendet werden müssen. Aus diesem Grund eignen sich derartige Solarzellen nicht für Massenprodukte, insbesondere für Messgeräte zur Verwendung in der Hausautomation. Ferner sind bekannte Lösungen zur Anpassung des optischen Erscheinungsbildes von Solarzellen hauptsächlich für Solaranwendungen im Außenbereich konzipiert, so dass diese für den Innenbereich, wo vergleichsweise schwache Lichtverhältnisse herrschen, schlecht geeignet sind.

Da in der Hausautomation verwendete Messgeräte, typischerweise an hellfarbigen, insbesondere weißen Wänden, angebracht werden, besteht die Nachfrage nach Photovoltaik betriebenen Messgeräten mit einem hellen, insbesondere weißen, optischen Erscheinungsbild. Physikalische Gründe machen es schwer ein derartiges Erscheinungsbild mit einer hohen Photovoltaikleistung bzw. Umwandlungswirkungsgrad zu vereinbaren. Um ein helles bzw. weißes Erscheinungsbild zu erreichen, muss ein großer Teil des auftreffenden Lichts von der Oberfläche über den gesamten sichtbaren Wellenlängenbereich reflektiert und / oder gestreut werden. Andererseits ist die spektrale Empfindlichkeit von a-Si-Solarzellen im sichtbaren Wellenlängenbereich am höchsten, so dass üblicherweise ein helles Erscheinungsbild nur mit hohen Wirkungsgradverlusten erreicht werden kann.

Zum Stand der Technik wird beispielhaft auf die Dokumente JP 2016 157356 A und DE 10 2006 032250 A1 verwiesen. Dokument JP 2016 157356 A beschreibt ein drahtloses Sensorterminal mit einem Solarzellenmodul als Stromversorgung. Dokument DE 10 2006 032250 A1 betrifft eine Energieversorgungseinheit für ein Feldgerät zum Messen eines Drucks oder eines Füllstandes, ein Feldgerät mit einer solchen Energieversorgungseinheit, die Verwendung einer Energieversorgungseinheit für ein Feldgerät und ein Verfahren zur Energieversorgung für ein solches Feldgerät.

Aufgabe der vorliegenden Erfindung ist es, die Nachteile der aus dem Stand der Technik bekannten Lösungen zur Anpassung des optischen Erscheinungsbildes einer mittels Photovoltaik betriebenen Sensorvorrichtung an deren Montageumgebung zumindest teilweise oder vollständig zu beseitigen.

### ZUSAMMENFASSUNG DER ERFINDUNG

Zur Lösung der obengenannten Aufgabe werden eine Sensorvorrichtung und ein Verfahren zum Herstellen einer Sensorvorrichtung gemäß den unabhängigen Ansprüchen bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Sensorvorrichtung bereitgestellt. Die Sensorvorrichtung umfasst mindestens einen Sensor und ein Gehäuse für den mindestens einen Sensor. Des Weiteren umfasst die Sensorvorrichtung mindestens eine Solarzelle zur Energieversorgung des mindestens einen Sensors, wobei die mindestens eine Solarzelle an einer Außenwand des Gehäuses angebracht ist. Der hierin verwendete Begriff "Solarzelle" kann auch als "Solarmodul" verstanden werden. Die Anbringung der Solarzelle an der Außenwand des Gehäuses kann dabei durch eine Befestigung auf der Außenseite des Gehäuses oder auf der Innenseite des Gehäuses (z.B. im Falle eines transparenten Gehäuses) umgesetzt werden. Alternative kann die Solarzelle in die Außenwand des Gehäuses integriert sein. Ferner umfasst die Sensorvorrichtung eine Abdeckung, welche eine photovoltaisch aktive Seite der mindestens einen Solarzelle abdeckt. Die Abdeckung umfasst ein transluzentes Material, insbesondere besteht die Abdeckung zumindest zu einem überwiegenden Teil aus einem transluzenten Material.

Somit wird vorteilhafterweise eine mittels Photovoltaik betreibbare Sensorvorrichtung bereitgestellt, welche optisch an deren Montageumgebung angepasst werden kann, ohne die Energiewandlungseffizienz der Solarzelle übermäßig zu beeinträchtigen. Insbesondere kann durch die Verwendung eines transluzenten Materials für die Abdeckung eine kostengünstige, funktionelle und ästhetische mittels Photovoltaik betreibbare Sensorvorrichtung bereitgestellt werden.

Gemäß einem weiteren Aspekt der Erfindung wird ein Verfahren zum Herstellen einer Sensorvorrichtung bereitgestellt. Das Verfahren umfasst die folgenden Verfahrensschritte: Herstellen eines Gehäuses für mindestens einen Sensor, wobei das Gehäuse eine Aufnahme für mindestens eine Solarzelle aufweist; Herstellen einer Abdeckung aus transluzentem Material, wobei die Abdeckung an das Gehäuse angepasst ist; Bereitstellen von mindestens einem Sensor in dem Gehäuse; Platzieren einer Solarzelle in der Aufnahme; Herstellen einer elektrischen Verbindung zwischen der mindestens einen Solarzelle und dem mindestens einen Sensor; und Montieren der Abdeckung an dem Gehäuse derart, dass die Abdeckung eine photovoltaisch aktive Seite der mindestens einen Solarzelle abdeckt, insbesondere dass die Abdeckung in direktem Kontakt mit der photovoltaisch aktiven Seite der mindestens einen Solarzelle in direktem Kontakt steht.

Somit wird vorteilhafterweise ein einfaches und kostengünstiges Herstellungsverfahren für eine Photovoltaik betreibbare Sensorvorrichtung bereitgestellt, die an deren Montageumgebung optisch angepasst werden kann ohne die Leistungseffizienz der Solarzelle übermäßig zu beeinträchtigen.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische Schnittansicht einer Sensorvorrichtung gemäß hierin beschriebenen Ausführungsformen;
- Figur 2A: eine schematische Draufsicht einer Sensorvorrichtung gemäß hierin beschriebenen Ausführungsformen ohne Abdeckung;
- Figur 2B: eine schematische Draufsicht einer Sensorvorrichtung gemäß hierin beschriebenen Ausführungsformen mit Abdeckung;
- Figur 3: eine schematische Schnittansicht eines Ausschnitts einer mit einer Solarzelle in Kontakt stehenden Abdeckung gemäß hierin beschriebenen Ausführungsformen; und
- Figur 4: eine Flussdiagramm zur Veranschaulichung eines Verfahrens zum Herstellen einer Sensorvorrichtung gemäß hierin beschriebenen Ausführungsformen.

### DETAILLIERTE BESCHREIBUNG DER FIGUREN

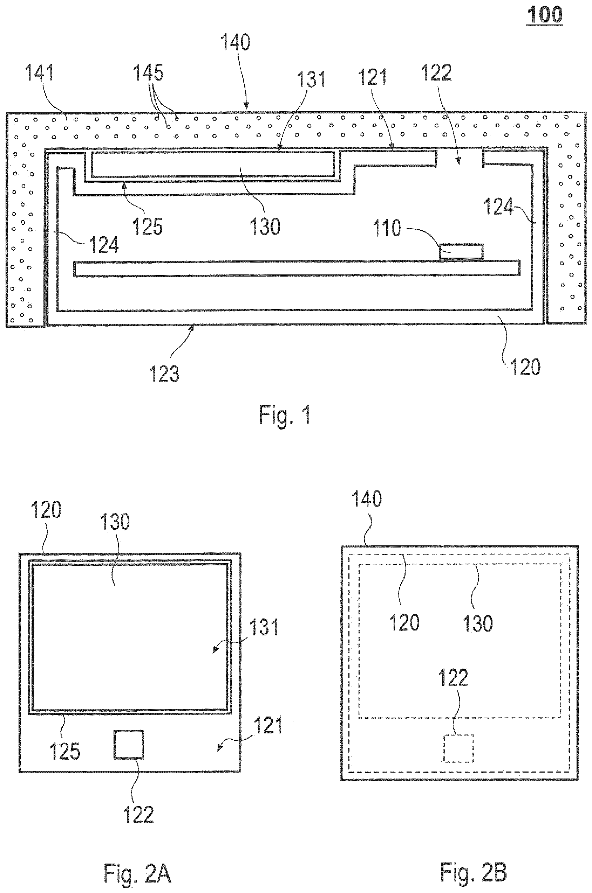

Figur 1 zeigt eine schematische Schnittansicht einer Sensorvorrichtung 100 gemäß hierin beschriebenen Ausführungsformen. Die Sensorvorrichtung 100 umfasst mindestens einen Sensor 110 und ein Gehäuse 120 für den mindestens einen Sensor 110. Beispielsweise kann der mindestens eine Sensor 110 einen oder mehrere Sensoren umfassen, die aus der Gruppe bestehend aus Temperatursensor, Feuchtigkeitssensor, Drucksensor, Lichtsensor, akustischer Sensor, Magnetfeldsensor, Gaskonzentrationssensor, Staubsensor, und Vibrationssensor oder anderen geeigneten mikro-elektromechanischen (MEMS) Sensoren ausgewählt sind. Beispielsweise kann die hierin beschriebene Sensorvorrichtung eine Hausautomationssensorvorrichtung, insbesondere für Innenräume, sein.

Ferner umfasst die Sensorvorrichtung 100 mindestens eine Solarzelle 130 zur Energieversorgung des mindestens einen Sensors 110. Typischerweise ist die mindestens eine Solarzelle eine siliziumbasierte Solarzelle. Beispielsweise, kann die Solarzelle eine auf amorphem Silizium (a-Si) basierte Solarzelle sein.

Wie beispielhaft in Figur 1 dargestellt ist, ist die Solarzelle 130 an einer Außenwand 121 des Gehäuses 120 angebracht. Insbesondere ist die Solarzelle 130 an einer Außenwand des Gehäuses angebracht, die in der Montageumgebung mit direktem oder zumindest diffusem Licht bestrahlt wird. Typischerweise ist die Außenwand 121 des Gehäuses 120, an der die Solarzelle 130 angebracht ist, gegenüber einer Montageseite 123 des Gehäuses angeordnet. Als Montageseite 123 ist diejenige Seite bzw. diejenige Wand des Gehäuses zu verstehen, die zur Montage der Sensorvorrichtung an einer Montagefläche, beispielsweise einer Wand, verwendet wird. Mit anderen Worten, im montierten Zustand ist die Montageseite 123 des Gehäuses typischer mit der Montagefläche zumindest teilweise mittelbar (z.B. mit Abstandshaltern) oder unmittelbar (d.h. direkt ohne Abstandshaltern) in Kontakt. Alternativ oder zusätzlich können eine oder mehrere Solarzellen an einer oder mehrerer der Seitenwände 124 des Gehäuses angebracht sein (in den Figuren nicht explizit dargestellt).

Darüber hinaus umfasst die Sensorvorrichtung 100 eine Abdeckung 140, wie es schematisch in Figur 1 dargestellt ist. Die Abdeckung 140 ist derart ausgestaltet, dass sie eine photovoltaisch aktive Seite 131 der Solarzelle 130 abdeckt. Typischerweise ist die photovoltaisch aktive Seite der Solarzelle eine von dem Gehäuse abgewandte Seite der Solarzelle. Erfindungsgemäß umfasst die Abdeckung 140 ein transluzentes Material 141. Insbesondere, besteht zumindest der Teil der Abdeckung 140, welcher die Solarzelle 130 abdeckt, aus einem transluzentem Material 141. Typischerweise besteht mindestens 80% der Abdeckung aus transluzentem Material. Gemäß einer Ausführungsform besteht die gesamte Abdeckung 140 aus einem transluzenten Material.

Demnach wird durch die hierin beschriebenen Ausführungsformen eine gegenüber dem Stand der Technik verbesserte Lösung zur Anpassung des optischen Erscheinungsbildes einer mittels Photovoltaik betriebenen Sensorvorrichtung an deren Montageumgebung bereitgestellt. Insbesondere wird eine mittels Photovoltaik betreibbare Sensorvorrichtung bereitgestellt, welche optisch an deren Montageumgebung angepasst werden kann ohne die Leistungseffizienz der Solarzelle übermäßig zu beeinträchtigen. Insbesondere kann durch die Verwendung eines transluzenten Materials für die Abdeckung eine kostengünstige und einfach herstellbare Sensorvorrichtung mit homogenen Erscheinungsbild bereitgestellt werden.

Durch die Verwendung eines transluzenten Materials ist die Abdeckung vorteilhafterweise derart ausgebildet, dass auftreffendes Licht von der Abdeckung im sichtbaren Spektralbereich gestreut wird und somit die Solarzelle optisch verdeckt. Gleichzeitig wird vorteilhafterweise die Energiewandlung der Solarzelle nur geringfügig beeinträchtigt. Dies bedeutet, dass die Abdeckung eine hohe optische Transmission im für die Solarzelle relevanten Spektralbereich aufweist.

Gemäß einer Ausführungsform, die mit anderen hierin beschriebenen Ausführungsformen kombiniert werden kann, steht die Abdeckung 140 in direktem Kontakt mit der photovoltaisch aktiven Seite 131 der Solarzelle 130. Dadurch kann vorteilhafterweise eine hohe integrale Transmission erreicht werden, da optische Grenzflächeneffekte vermieden werden können.

Gemäß einer Ausführungsform, die mit anderen hierin beschriebenen Ausführungsformen kombiniert werden kann, wird zwischen die Abdeckung 140 und der photovoltaisch aktiven Seite 131 der Solarzelle 130 ein definierter Abstand vorgesehen. Dadurch kann vorteilhafterweise eine hohe integrale Transmission erreicht werden, da die diffuse Transmission eines größeren Anteils der Abdeckung 140 genutzt werden kann. Ein Beispiel hierfür wäre, dass auch durch die Seitenwände 124 Licht zur Solarzelle 130 gelangen kann, sodass bei einer zumindest teilweisen Bestrahlung der Sensorvorrichtung 100 von der Seite eine höhere Energiewandlung durch die Solarzelle 130 erzielt würde.

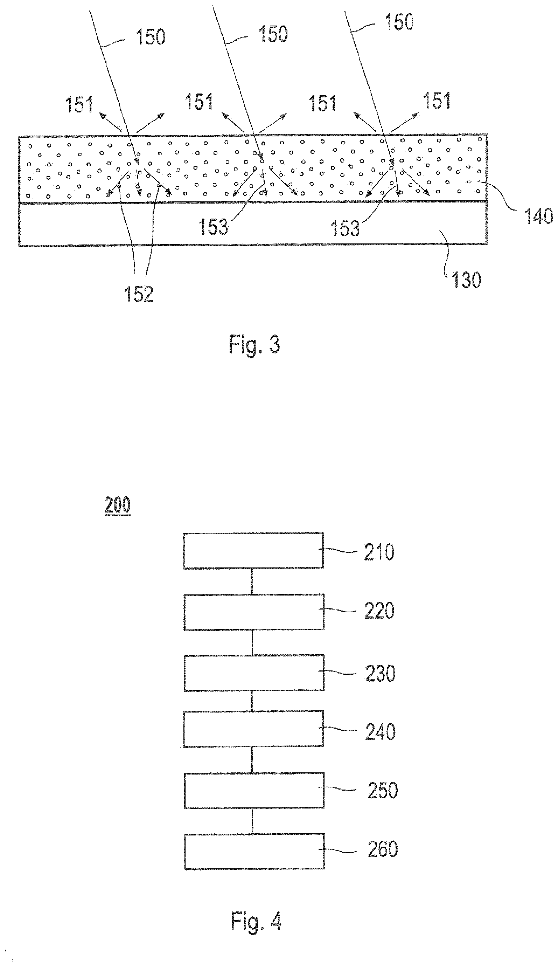

Figur 3 zeigt eine schematische Schnittansicht eines Ausschnitts einer Abdeckung 140 gemäß hierin beschriebenen Ausführungsformen die mit einer Solarzellen 130 in direktem Kontakt steht. Das eingestrahlte Licht ist beispielhaft durch die Pfeile 150 dargestellt. Reflektierte Lichtanteile sind durch die Pfeile 151 dargestellt. Die an der Solarzelle ankommenden Lichtanteile sind zum einen die direkt transmittierten Lichtanteile (dargestellt durch die Pfeile 153) und die diffus (gestreut) transmittierten Lichtanteile (dargestellt durch die Pfeile 152).

Gemäß einer Ausführungsform, die mit anderen hierin beschriebenen Ausführungsformen kombiniert werden kann, weist das transluzente Material einen integralen Transmissionsgrad Tint von beispielsweise Tᵢₙₜ ≥ 70%, insbesondere Tᵢₙₜ ≥ 80%, insbesondere Tᵢₙₜ ≥ 85% auf. Beispielsweise kann der integralen Transmissionsgrad Tint des transluzenten Materials Tint ≥ 90% sein. Der direkte Transmissionsgrad T_{d} des transluzenten Materials ist typischerweise relativ gering. Beispielswiese kann der direkte Transmissionsgrad T_{d} des transluzenten Materials T_{d} ≤ 10%, insbesondere T_{d} ≤ 8%, insbesondere T_{d} ≤ 5% sein. Typischerweise ist der direkte Transmissionsgrad T_{d} ≤ 3%. Es sei darauf hingewiesen, dass die Werte für den integralen Transmissionsgrad Tint als auch die Werte für den direkten Transmissionsgrad T_{d} gemäß dem erwünschten Erscheinungsbild eingestellt werden können, um beispielsweise einen geeigneten Kompromiss zwischen Aussehen, Transmission und Kosten zu erzielen.

Die hierin angegebenen Werte für den integralen Transmissionsgrad Tᵢₙₜ als auch die Werte für den direkten Transmissionsgrad T_{d} gelten für den Wellenlängenbereich 350 nm ≤ λ ≤ 1200 nm, insbesondere für den Wellenlängenbereich 400 nm ≤ λ ≤ 1100 nm.

Demnach ist das transluzente Material vorteilhafterweise derart konfiguriert, dass der Streulichtanteil des integralen Transmissionsgrads relativ hoch ist, so dass ein homogenes Erscheinungsbild der Abdeckung und damit der Sensorvorrichtung realisiert werden kann. Insbesondere kann mit den hierein beschriebenen Ausführungsformen vorteilhafterweise ein homogen helles, insbesondere weißes, Erscheinungsbild der Abdeckung und damit der Sensorvorrichtung realisiert werden kann.

Gemäß einer Ausführungsform, die mit anderen hierin beschriebenen Ausführungsformen kombiniert werden kann, werden die optische Transmission des transluzenten Materials und die Quanteneffizienz der Solarzelle aufeinander abgestimmt. Dies bedeutet insbesondere, dass die optische Transmission des transluzenten Materials bei den Wellenlängen besonders hoch ist, bei denen die Solarzelle eine hohe Energiewandlugsneffizienz besitzt.

Gemäß einer Ausführungsform, die mit anderen hierin beschriebenen Ausführungsformen kombiniert werden kann, besteht das transluzente Material aus einem thermoplastischen Kunststoff. Dies hat den Vorteil, dass die Abdeckung aus transluzentem Material mittels eines Spritzgussverfahrens oder mittels eines Extrudierverfahrens hergestellt werden kann. Insbesondere kann das transluzente Material ein Polymethylmethacrylat (PMMA) umfassen. Alternativ oder zusätzlich kann das transluzente Material ein Polycarbonat (PC) umfassen.

Gemäß einer Ausführungsform, die mit anderen hierin beschriebenen Ausführungsformen kombiniert werden kann, kann auch das Gehäuse 120 für den mindestens einen Sensor 110 aus einem thermoplastischen Kunststoff, insbesondere aus dem gleichen thermoplastischen Kunststoff wie die Abdeckung 140, hergestellt sein. Somit können vorteilhafterweise kostengünstige, funktionell und optisch optimierte Sensorvorrichtungen bereitgestellt werden. In diesem Fall kann das Gehäuse die Funktion der Abdeckung in einem Bauteil integrieren. Durch diese Funktionsintegration kann der Montageaufwand und damit Kosten reduziert werden.

Erfindungsgemäß sind Partikel 145 mit lichtstreuenden Eigenschaften in das transluzente Material eingebettet, wie es beispielhaft in Figur 1 dargestellt ist. Beispielsweise können die Partikel 145 zur Anpassung des optischen Erscheinungsbildes der Abdeckung eingefärbt sein. Mit anderen Worten, durch Zugabe von Partikeln mit lichtstreuenden Eigenschaften wird die Lichtstreuungseigenschaft der Abdeckung eingestellt.

Erfindungsgemäß ist das transluzente Material derart angepasst, dass es auftreffende Photonen des eingestrahlten Lichtes in Wellenlängen umwandelt, bei denen die Quanteneffizienz der Solarzelle höher ist als bei den Wellenlängen des ursprünglichen eingestrahlten Lichts. Dies ist erfindungsgemäß durch den Einsatz von fluoreszierenden Materialien umgesetzt. Insbesondere kann durch die Verwendung von PMMA ein transluzentes Material mit Fluoreszenzeigenschaften bereitgestellt werden, so dass der integrale Transmissionsgrad verbessert, d.h. erhöht, werden kann.

Gemäß einer Ausführungsform, die mit anderen hierin beschriebenen Ausführungsformen kombiniert werden kann, kann die Abdeckung 140 plattenförmig ausgebildet sein, wie es beispielhaft in Figur 1 gezeigt. Typischerweise ist die Abdeckung 140 an dem Gehäuse 120 über geeignete Befestigungsmittel verbindbar. Die Befestigungsmittel können beispielsweise durch einen Schnapp- oder Schiebmechanismus zwischen Abdeckung 140 und Gehäuse 120 bereitgestellt werden. Alternativ oder zusätzlich können auch Schrauben oder andere geeignete Befestigungsmittel verwendet werden.

Wie beispielhaft aus Figur 1 hervorgeht, ist die Abdeckung typischerweise an die Form des Gehäuses angepasst. Zum Beispiel kann die die Abdeckung 140 derart ausgestaltet sein, dass die Abdeckung die Seitenwände 124 des Gehäuses 120 zumindest teilweise umgreift. Figur 1 zeigt eine beispielhafte Ausführungsform, in der die Abdeckung 140 die Seitenwände 124 des Gehäuses 120 vollständig umgreift.

Gemäß einer Ausführungsform, die mit anderen hierin beschriebenen Ausführungsformen kombiniert werden kann, weist das Gehäuse 120 einen lichtdurchlässigen Abschnitt 122 auf, wie es beispielhaft in Figur 1 dargestellt ist. Beispielsweise kann der lichtdurchlässige Abschnitt 122 eine Öffnung in dem Gehäuse sein. Die Bereitstellung eines lichtdurchlässigen Abschnitts 122 im Gehäuse ist besonders vorteilhaft für eine Konfiguration in der mindestens ein Sensor als Lichtsensor ausgeführt ist. In diesem Fall ist der Lichtsensor typischerweise unterhalb des lichtdurchlässigen Abschnitts 122 angeordnet, wie es beispielhaft in Figur 1 gezeigt ist.

Gemäß einer Ausführungsform, die mit anderen hierin beschriebenen Ausführungsformen kombiniert werden kann, weist das Gehäuse 120 eine Aufnahme 125 für die Solarzelle 130 auf. Beispielsweise kann die Aufnahme eine Vertiefung in der Außenwand 121 des Gehäuses sein, an der die Solarzelle angebracht ist.

Gemäß einer Ausführungsform, die mit anderen hierin beschriebenen Ausführungsformen kombiniert werden kann, deckt die Abdeckung 140 die Außenwand 121 des Gehäuses, an der die Solarzelle angebracht ist, vollständig ab, wie es beispielhaft aus den Figuren 2A und 2B hervorgeht. Figur 2A zeigt eine schematische Draufsicht einer Sensorvorrichtung gemäß hierin beschriebenen Ausführungsformen ohne Abdeckung und Figur 2B zeigt eine schematische Draufsicht einer Sensorvorrichtung gemäß hierin beschriebenen Ausführungsformen mit Abdeckung 140.

Gemäß einer Ausführungsform, die mit anderen hierin beschriebenen Ausführungsformen kombiniert werden kann, weist die Außenwand 121 des Gehäuses 120, an der die Solarzelle angebracht ist, einen ersten Rauheitswert Rₐ₁ auf, der an einen zweiten Rauheitswert Rₐ₂ der Solarzelle 130 angepasst ist, insbesondere so dass 0,75·Rₐ₂ ≤ Rₐ₁ ≤ 1,25·Rₐ₂ ist. Dies kann vorteilhaft sein um ein homogenes Erscheinungsbild zu erreichen.

Figur 4 zeigt ein Flussdiagramm zur Veranschaulichung eines Verfahrens 200 zum Herstellen einer Sensorvorrichtung gemäß hierin beschriebenen Ausführungsformen. Dass Verfahren 200 umfasst die folgenden Verfahrensschritte: Herstellen (dargestellt durch Block 210) eines Gehäuses 120 für mindestens einen Sensor 110, wobei das Gehäuse eine Aufnahme 125 für eine Solarzelle 130 aufweist; Herstellen (dargestellt durch Block 220) einer Abdeckung 140 aus transluzentem Material, umfassend ein fluoreszierendes Material, wodurch auftreffende Photonen des eingestrahlten Lichtes in Wellenlängen umgewandelt werden, bei denen die Quanteneffizienz der Solarzelle höher ist als bei den Wellenlängen des ursprünglichen eingestrahlten Lichts, wobei die Abdeckung 140 an das Gehäuse 120 angepasst ist; Bereitstellen (dargestellt durch Block 230) von mindestens einem Sensor in dem Gehäuse; Platzieren (dargestellt durch Block 240) einer Solarzelle 130 in der Aufnahme 125; Herstellen (dargestellt durch Block 250) einer elektrischen Verbindung zwischen der Solarzelle 130 und dem mindestens einen Sensor 110; und Montieren (dargestellt durch Block 260) der Abdeckung 140 an dem Gehäuse derart, dass die Abdeckung 140 in direktem Kontakt mit der photovoltaisch aktiven Seite 131 der mindestens einen Solarzelle 130 abdeckt, insbesondere dass die Abdeckung 140 in direktem Kontakt mit der photovoltaisch aktiven Seite der mindestens einen Solarzelle steht. Alternativ kann die Abdeckung 140 an dem Gehäuse auch derart montiert werden, dass zwischen der Abdeckung 140 und der photovoltaisch aktiven Seite 131 der mindestens einen Solarzelle 130 ein definierter Abstand vorgesehen ist.

Erfindungsgemäß umfasst das Herstellen 220 der Abdeckung 140 ein Einbetten von Partikeln 145 mit lichtstreuenden Eigenschaften.

Gemäß einer Ausführungsform des Verfahrens zum Herstellen der Sensorvorrichtung, die mit anderen hierin beschriebenen Ausführungsformen kombiniert werden kann, umfasst das Herstellen 210 des Gehäuses 120 und/oder das Herstellen 220 der Abdeckung 140 ein Spritzgussverfahren und/oder ein Extrudierverfahren.

Wie aus den hierin beschriebenen Ausführungsformen hervorgeht wird vorteilhafterweise eine mittels Photovoltaik betriebene Sensorvorrichtung und ein entsprechendes Herstellungsverfahren bereitgestellt, welche gegenüber dem Stand der Technik eine verbesserte und kostengünstigere Lösung zur Einstellung und Anpassung des optischen Erscheinungsbildes ermöglichen, ohne die Energiewandlungseffizienz der Solarzelle übermäßig zu beeinträchtigen.

### BEZUGZEICHENLISTE

- 100: Sensorvorrichtung
- 110: Sensor
- 120: Gehäuse
- 121: Außenwand des Gehäuses
- 122: lichtdurchlässiger Abschnitt des Gehäuses
- 123: Montageseite des Gehäuses
- 124: Seitenwände des Gehäuses
- 125: Aufnahme für die Solarzelle
- 130: Solarzelle
- 131: photovoltaisch aktive Seite der Solarzelle
- 140: Abdeckung
- 141: transluzentes Material
- 145: Partikel mit lichtstreuenden Eigenschaften
- 200: Verfahren zum Herstellen einer Sensorvorrichtung
- 210: Verfahrensschritt: Herstellen eines Gehäuses für mindestens einen Sensor
- 220: Verfahrensschritt: Herstellen einer Abdeckung aus transluzentem Material
- 230: Verfahrensschritt: Bereitstellen eines Sensors
- 240: Verfahrensschritt: Platzieren einer Solarzelle
- 250: Verfahrensschritt: Herstellen einer elektrischen Verbindung
- 260: Verfahrensschritt: Montieren der Abdeckung an dem Gehäuse

## Patentansprüche

1. Sensorvorrichtung (100), umfassend:
- mindestens einen Sensor (110);
- ein Gehäuse (120) für den mindestens einen Sensor (110);
- mindestens eine Solarzelle (130) zur Energieversorgung des mindestens einen Sensors (110), wobei die mindestens eine Solarzelle (130) an einer Außenwand (121) des Gehäuses (120) angebracht ist; und
- eine Abdeckung (140), welche eine photovoltaisch aktive Seite (131) der mindestens einen Solarzelle (130) abdeckt, wobei die Abdeckung (140) ein transluzentes Material (141) umfasst, wobei Partikel (145) mit lichtstreuenden Eigenschaften in das transluzente Material eingebettet sind, und wobei das transluzente Material ein fluoreszierendes Material umfasst, wodurch auftreffende Photonen des eingestrahlten Lichtes in Wellenlängen umgewandelt werden, bei denen die Quanteneffizienz der Solarzelle höher ist als bei den Wellenlängen des ursprünglichen eingestrahlten Lichts.

2. Sensorvorrichtung (100) nach Anspruch 1, wobei die Abdeckung (140) in direktem Kontakt mit der photovoltaisch aktiven Seite (131) der mindestens einen Solarzelle (130) steht.

3. Sensorvorrichtung (100) nach Anspruch 1, wobei zwischen der Abdeckung (140) und der photovoltaisch aktiven Seite (131) der mindestens einen Solarzelle (130) ein definierter Abstand vorgesehen ist.

4. Sensorvorrichtung (100) nach einem der Ansprüche 1 bis 3, wobei die Abdeckung (140) die Außenwand (121) des Gehäuses, an der die mindestens eine Solarzelle angebracht ist, vollständig abdeckt.

5. Sensorvorrichtung (100) nach einem der Ansprüche 1 bis 4, wobei die Außenwand (121) des Gehäuses (120), an der die Solarzelle angebracht ist, einen ersten Rauheitswert Rₐ₁ aufweist, der an einen zweiten Rauheitswert Rₐ₂ der mindestens einen Solarzelle (130) angepasst ist, so dass 0,75·Rₐ₂ ≤ Rₐ₁ ≤ 1,25·Rₐ₂ ist.

6. Sensorvorrichtung (100) nach einem der Ansprüche 1 bis 5, wobei die optische Transmission des transluzenten Materials der Abdeckung (140) und die Quanteneffizienz der mindestens einen Solarzelle (130) aufeinander abgestimmt sind.

7. Sensorvorrichtung (100) nach einem der Ansprüche 1 bis 6, wobei das transluzente Material aus einem thermoplastischen Kunststoff besteht, insbesondere umfassend Polymethylmethacrylat (PMMA) und / oder Polycarbonat (PC).

8. Sensorvorrichtung (100) nach einem der Ansprüche 1 bis 7, wobei die Abdeckung (140) mittels eines Spritzgussverfahrens oder mittels eines Extrudierverfahren hergestellt ist.

9. Sensorvorrichtung (100) nach einem der Ansprüche 1 bis 8, wobei das Gehäuse (120) eine Aufnahme (125) für die mindestens eine Solarzelle (130) aufweist.

10. Sensorvorrichtung (100) nach einem der Ansprüche 1 bis 9, wobei die mindestens eine Solarzelle (130) eine siliziumbasierte Solarzelle, insbesondere eine auf amorphem Silizium basierte Solarzelle, ist.

11. Sensorvorrichtung (100) nach einem der Ansprüche 1 bis 10, wobei der mindestens eine Sensor (110) einen oder mehrere Sensoren umfasst, ausgewählt aus der Gruppe bestehend aus: Temperatursensor, Feuchtigkeitssensor, Drucksensor, Lichtsensor, Gaskonzentrationssensor, akustischer Sensor, Magnetfeldsensor, Staubsensor, und Vibrationssensor oder anderen geeigneten mikro-elektromechanischen (MEMS) Sensoren.

12. Sensorvorrichtung (100) nach einem der Ansprüche 1 bis 11, wobei das Gehäuse (120) einen lichtdurchlässigen Abschnitt (122), insbesondere eine Öffnung, aufweist.

13. Sensorvorrichtung (100) nach einem der Ansprüche 1 bis 12, wobei die Sensorvorrichtung eine Hausautomationssensorvorrichtung ist, insbesondere für Innenräume.

14. Verfahren (200) zum Herstellen einer Sensorvorrichtung, umfassend:
- Herstellen (210) eines Gehäuses (120) für mindestens einen Sensor (110), wobei das Gehäuse eine Aufnahme (125) für mindestens eine Solarzelle (130) aufweist;
- Herstellen (220) einer Abdeckung (140) aus transluzentem Material umfassend ein fluoreszierendes Material, wodurch auftreffende Photonen des eingestrahlten Lichtes in Wellenlängen umgewandelt werden, bei denen die Quanteneffizienz der Solarzelle höher ist als bei den Wellenlängen des ursprünglichen eingestrahlten Lichts, wobei die Abdeckung (140) an das Gehäuse (120) angepasst ist, und wobei das Herstellen (220) der Abdeckung (140) ein Einbetten von Partikeln (145) mit lichtstreuenden Eigenschaften umfasst;
- Bereitstellen (230) von mindestens einem Sensor (110) in dem Gehäuse;
- Platzieren (240) mindestens einer Solarzelle (130) in der Aufnahme (125);
- Herstellen (250) einer elektrischen Verbindung zwischen der mindestens einen Solarzelle (130) und dem mindestens einen Sensor (110); und
- Montieren (260) der Abdeckung (140) an dem Gehäuse derart, dass die Abdeckung (140) eine photovoltaisch aktive Seite (131) der mindestens einen Solarzelle (130) abdeckt, insbesondere dass die Abdeckung (140) in direktem Kontakt mit der photovoltaisch aktiven Seite der mindestens einen Solarzelle steht.

15. Verfahren (200) nach Anspruch 14, wobei zwischen der Abdeckung (140) und der photovoltaisch aktiven Seite (131) der mindestens einen Solarzelle (130) ein definierter Abstand vorgesehen ist.

16. Verfahren (200) nach Anspruch 14 oder 15, wobei das Herstellen (210) des Gehäuses (120) und/oder das Herstellen (220) der Abdeckung (140) ein Spritzgussverfahren und/oder ein Extrudierverfahren umfasst.

## Claims

1. Sensor apparatus (100) comprising:
- at least one sensor (110);
- a housing (120) for the at least one sensor (110);
- at least one solar cell (130) for supplying energy to the at least one sensor (110), wherein the at least one solar cell (130) is mounted on an external wall (121) of the housing (120); and
- a cover (140), which covers a photovoltaically active side (131) of the at least one solar cell (130), wherein the cover (140) comprises a translucent material (141), wherein particles (145) having light-scattering properties are embedded in the translucent material, and wherein the translucent material comprises a fluorescent material through which incident photons of the incoming light are converted into wavelengths in which the quantum efficiency of the solar cell is greater than in the case of the wavelengths of the original incoming light.

2. Sensor apparatus (100) according to Claim 1, wherein the cover (140) is in direct contact with the photovoltaically active side (131) of the at least one solar cell (130).

3. Sensor apparatus (100) according to Claim 1, wherein a defined distance is provided between the cover (140) and the photovoltaically active side (131) of the at least one solar cell (130).

4. Sensor apparatus (100) according to one of Claims 1 to 3, wherein the cover (140) completely covers the external wall (121) of the housing on which the at least one solar cell is mounted.

5. Sensor apparatus (100) according to one of Claims 1 to 4, wherein the external wall (121) of the housing (120), on which the solar cell is mounted, has a first roughness value Rai, which is adapted to a second roughness value Rₐ₂ of the at least one solar cell (130), so that 0.75·Ra₂ ≤ Ra₁ ≤ 1.25·Ra₂.

6. Sensor apparatus (100) according to one of Claims 1 to 5, wherein the optical transmission of the translucent material of the cover (140) and the quantum efficiency of the at least one solar cell (130) are matched to one another.

7. Sensor apparatus (100) according to one of Claims 1 to 6, wherein the translucent material consists of a thermoplastic material, in particular comprising polymethyl methacrylate (PMMA) and/or polycarbonate (PC) .

8. Sensor apparatus (100) according to one of Claims 1 to 7, wherein the cover (140) is produced by means of an injection-moulding method or by means of an extrusion method.

9. Sensor apparatus (100) according to one of Claims 1 to 8, wherein the housing (120) has a holder (125) for the at least one solar cell (130).

10. Sensor apparatus (100) according to one of Claims 1 to 9, wherein the at least one solar cell (130) is a silicon-based solar cell, in particular a solar cell based on amorphous silicon.

11. Sensor apparatus (100) according to one of Claims 1 to 10, wherein the at least one sensor (110) comprises one or more sensors selected from the group consisting of: temperature sensor, humidity sensor, pressure sensor, light sensor, gas concentration sensor, acoustic sensor, magnetic field sensor, dust sensor and vibration sensor or other suitable micro-electromechanical (MEMS) sensors.

12. Sensor apparatus (100) according to one of Claims 1 to 11, wherein the housing (120) has a light-transmissive portion (122), in particular an opening.

13. Sensor apparatus (100) according to one of Claims 1 to 12, wherein the sensor apparatus is a house automation sensor apparatus, in particular for internal spaces.

14. Method (200) for producing a sensor apparatus, comprising:
- producing (210) a housing (120) for at least one sensor (110), wherein the housing has a holder (125) for at least one solar cell (130);
- producing (220) a cover (140) made of translucent material comprising a fluorescent material through which incident photons of the incoming light are converted into wavelengths in which the quantum efficiency of the solar cell is greater than in the case of the wavelengths of the original incoming light, wherein the cover (140) is adapted to the housing (120), and wherein the production (220) of the cover (140) comprises embedding particles (145) having light-scattering properties;
- providing (230) at least one sensor (110) in the housing;
- placing (240) at least one solar cell (130) in the holder (125);
- establishing (250) an electrical connection between the at least one solar cell (130) and the at least one sensor (110); and
- mounting (260) the cover (140) on the housing such that the cover (140) covers a photovoltaically active side (131) of the at least one solar cell (130), in particular such that the cover (140) is in direct contact with the photovoltaically active side of the at least one solar cell.

15. Method (200) according to Claim 14, wherein a defined distance is provided between the cover (140) and the photovoltaically active side (131) of the at least one solar cell (130).

16. Method (200) according to Claim 14 or 15, wherein the production (210) of the housing (120) and/or the production (220) of the cover (140) comprises an injection-moulding method and/or an extrusion method.

## Revendications

1. Dispositif de détection (100), comprenant :
- au moins un capteur (110) ;
- un boîtier (120) pour ledit au moins un capteur (110) ;
- au moins une cellule solaire (130) pour l'alimentation en énergie de l'au moins un capteur (110), ladite au moins une cellule solaire (130) étant fixée sur une paroi extérieure (121) du boîtier (120) ; et
- un capot (140) qui recouvre une face à activité photovoltaïque (131) de ladite au moins une cellule solaire (130), le capot (140) comprenant un matériau translucide (141), des particules (145) ayant des propriétés de diffusion de la lumière étant incorporées dans le matériau translucide, et le matériau translucide comprenant un matériau fluorescent de sorte que des photons incidents de la lumière irradiée sont convertis en des longueurs d'onde auxquelles le rendement quantique de la cellule solaire est supérieur à celui aux longueurs d'onde de la lumière initialement irradiée.

2. Dispositif de détection (100) selon la revendication 1, dans lequel le capot (140) est en contact direct avec la face à activité photovoltaïque (131) de ladite au moins une cellule solaire (130).

3. Dispositif de détection (100) selon la revendication 1, dans lequel une distance définie est prévue entre le capot (140) et la face à activité photovoltaïque (131) de ladite au moins une cellule solaire (130).

4. Dispositif de détection (100) selon l'une quelconque des revendications 1 à 3, dans lequel le capot (140) recouvre complètement la paroi extérieure (121) du boîtier sur laquelle est fixée ladite au moins une cellule solaire.

5. Dispositif de détection (100) selon l'une quelconque des revendications 1 à 4, dans lequel la paroi extérieure (121) du boîtier (120) sur laquelle est fixée la cellule solaire présente une première valeur de rugosité Rₐ₁ qui est adaptée à une deuxième valeur de rugosité Rₐ₂ de ladite au moins une cellule solaire (130) de sorte que 0,75·Rₐ₂ ≤ Rₐ₁ ≤ 1,25·Rₐ₂.

6. Dispositif de détection (100) selon l'une quelconque des revendications 1 à 5, dans lequel la transmission optique du matériau translucide du capot (140) et le rendement quantique de ladite au moins une cellule solaire (130) sont adaptés l'un à l'autre.

7. Dispositif de détection (100) selon l'une quelconque des revendications 1 à 6, dans lequel le matériau translucide est composé d'une matière thermoplastique, comprenant en particulier du polyméthylméthacrylate (PMMA) et/ou du polycarbonate (PC).

8. Dispositif de détection (100) selon l'une quelconque des revendications 1 à 7, dans lequel le capot (140) est fabriqué au moyen d'un procédé de moulage par injection ou au moyen d'un procédé d'extrusion.

9. Dispositif de détection (100) selon l'une quelconque des revendications 1 à 8, dans lequel le boîtier (120) présente un logement (125) pour ladite au moins une cellule solaire (130).

10. Dispositif de détection (100) selon l'une quelconque des revendications 1 à 9, dans lequel ladite au moins une cellule solaire (130) est une cellule solaire à base de silicium, en particulier une cellule solaire à base de silicium amorphe.

11. Dispositif de détection (100) selon l'une quelconque des revendications 1 à 10, dans lequel ledit au moins un capteur (110) comprend un ou plusieurs capteurs, sélectionnés dans le groupe composé : d'un capteur de température, d'un capteur d'humidité, d'un capteur de pression, d'un capteur de lumière, d'un capteur de concentration en gaz, d'un capteur acoustique, d'un capteur de champ magnétique, d'un capteur de poussière et d'un capteur de vibration ou d'autres capteurs micro-électromécaniques (MEMS) adaptés.

12. Dispositif de détection (100) selon l'une quelconque des revendications 1 à 11, dans lequel le boîtier (120) présente une partie laissant passer la lumière (122), en particulier une ouverture.

13. Dispositif de détection (100) selon l'une quelconque des revendications 1 à 12, dans lequel le dispositif de détection est un dispositif de détection d'un système domotique, en particulier pour des pièces intérieures.

14. Procédé (200) de fabrication d'un dispositif de détection, comprenant les étapes consistant à :
- fabriquer (210) un capot (120) pour au moins un capteur (110), le boîtier présentant un logement (125) pour au moins une cellule solaire (130) ;
- fabriquer (220) un capot (140) en matériau translucide comprenant un matériau fluorescent de sorte que des photons incidents de la lumière irradiée sont convertis en des longueurs d'onde auxquelles le rendement quantique de la cellule solaire est supérieur à celui aux longueurs d'onde de la lumière initialement irradiée, le capot (140) étant adapté au boîtier (120), et la fabrication (220) du capot (140) comprenant une incorporation de particules (145) ayant des propriétés de diffusion de la lumière ;
- fournir (230) au moins un capteur (110) dans le capot ;
- placer (240) au moins une cellule solaire (130) dans le logement (125) ;
- établir (250) une liaison électrique entre ladite au moins une cellule solaire (130) et ledit au moins un capteur (110) ; et
- monter (260) le capot (140) sur le boîtier de telle sorte que le capot (140) recouvre une face à activité photovoltaïque (131) de ladite au moins une cellule solaire (130), en particulier de telle sorte que le capot (140) est en contact direct avec la face à activité photovoltaïque de ladite au moins une cellule solaire.

15. Procédé (200) selon la revendication 14, dans lequel, une distance définie est prévue entre le capot (140) et la face à activité photovoltaïque (131) de ladite au moins une cellule solaire (130).

16. Procédé (200) selon la revendication 14 ou 15, dans lequel la fabrication (210) du boîtier (120) et/ou la fabrication (220) du capot (140) comprennent un procédé de moulage par injection et/ou un procédé d'extrusion.
